# EUROPEAN PATENT APPLICATION

(11) **EP 4 011 217 A1**
(43) Date of publication of application: **15.06.2022**
(21) Application number: 20213198.3
(22) Date of filing: 10.12.2020
(51) Int. Cl.: A23P 30/20

(54) **FOOD MANUFACTURING APPARATUS METHOD FOR MANUFACTURING A FOOD PRODUCT IN A 3D PRINTING PROCESS**

(71) Applicant: Scienion GmbH, 12489 Berlin (DE)
(72) Inventor: EICKHOFF, Holger, 12489 Berlin (DE)
(74) Representative: v. Bezold & Partner Patentanwälte - PartG mbB

(57) **Abstract**

A food manufacturing apparatus 100 for manufacturing a food product 1, in particular a meat or meat replacement product 1, in a 3D printing process, comprises a movable carrier substrate 10 extending along a longitudinal substrate direction x and being adapted for accommodating the food product 1, a deposition device 20 comprising a plurality of deposition modules 21, which are arranged along the longitudinal substrate direction x of the carrier substrate 10, wherein each deposition module 21 is arranged for depositing components of the food product 1 on the carrier substrate 10, a conveyor device 30 being arranged for moving the carrier substrate 10 along the longitudinal substrate direction x thereof relative to the deposition modules 21, and a collection device 40 being arranged for collecting the food product 1. Furthermore, a method of manufacturing a food product 1, in particular a meat or meat replacement product, is described.

## Description

### Field of the invention

The invention relates to a food manufacturing apparatus, being configured for manufacturing a food product, in particular a meat or meat replacement product, in a 3D printing process. Furthermore, the invention relates to a food manufacturing method of manufacturing a food product, in particular a meat or meat replacement product. Applications of the invention are available e. g. in food industry and/or in food preparation techniques, e. g. in a kitchen for personal consumption.

### Technical background

New approaches for creating food, in particular meat or meat replacements, comprise growing food products on the basis of tissue engineering or manufacturing food products in a 3D printing process. With the tissue engineering based techniques, food products are grown by cultivating and differentiating biological cells in a bioreactor. Due to substantial disadvantages in terms of high costs, slow production speed and restriction to a limited number of cell types, e. g. animal cells for meat production, tissue engineering based techniques have not yet substantial practical applications.

Manufacturing food in a 3D printing process is done by extruding food components of the food product to be manufactured onto a carrier substrate (see e. g. US 2019/0375163 A1, US 2018/0345563 A1, WO 2020/030628 A1, WO 2014/190168 A1, US 2018/0192686 A1, WO 2020/152689 A1, and US 2013/034633A1). Extruding the food components typically comprises operating a material applicator, like a single extruder tool with at least one extruder nozzle above the carrier substrate, wherein the food components are deposited with the extruder tool line by line and layer by layer, and post-processing, like heating, the deposited food components. The food components are arranged and distributed in the completed food product, like a steak product, similar to the arrangement of components in a natural food product.

Advantageously, the food components to be extruded can be provided as prepared precursor substances so that any limitations caused by cell cultivation in a bioreactor can be excluded. Nevertheless, the conventional food manufacturing by 3D printing has practical limitations caused by the following disadvantages. Firstly, the available 3D food printing techniques still suffer from a relatively low production speed, which results from limits in the operation speed of the extruder tool. The output of a conventional food manufacturing machine can be increased to a certain degree with a multi-station approach, including increasing the number of carrier substrates and extruder tools operated in parallel. However, this results in a complex machine configuration with increased costs. Furthermore, the available 3D food printing techniques have limited capabilities of changing the food properties on demand. As an example, flavours or spices cannot be added by extrusion, so that these components have to be included in the precursor substances. For changing a taste of a food product, the extruder tool has to be changed and/or another precursor substance reservoir has to be connected with the extruder tool.

Apart from the field of food manufacturing, 3D printing has extended applications in manufacturing of technical products, e. g. in manufacturing structural components from plastics or composite materials. For these tasks, it is known from practice that a conveyor belt can be used as a substrate for the printed product, either for manufacturing a product with a strand shape, like a strand profile, or for removing a completed product from a printing site. However, in particular due to the use of single material applicators, these techniques cannot be employed for printing food products.

### Objective of the invention

An objective of the invention is to provide an improved food manufacturing apparatus for manufacturing a food product, in particular a meat or meat replacement product, in a 3D printing process, being capable of avoiding disadvantages of conventional techniques. Furthermore, another objective of the invention is to provide an improved food manufacturing method of manufacturing a food product, in particular a meat product, in a 3D printing process, being capable of avoiding disadvantages of conventional techniques. In particular, food manufacturing with the food manufacturing apparatus and/or method is to be provided with increased production speed, reduced costs, reduced complexity, extended applications and/or improved capabilities of adjusting a food composition, e. g. on demand.

### Brief summary of the invention

These objectives are solved by a food manufacturing apparatus and a food manufacturing method comprising the features of the independent claims, respectively. Preferred embodiments and applications of the invention arise from the dependent claims.

According to a first general aspect of the invention, the above objective is solved by a food manufacturing apparatus, being configured for manufacturing a food product, in particular a meat product, in a 3D printing process, comprising a movable carrier substrate extending and in particular being movable along a longitudinal substrate direction and being adapted for accommodating the food product, a deposition device comprising a plurality of deposition modules (or. deposition stations), which are arranged along the longitudinal substrate direction of the carrier substrate, wherein each deposition module is arranged for depositing components of the food product on the carrier substrate, a conveyor device being arranged for moving the carrier substrate along the longitudinal substrate direction thereof relative to the deposition modules, and a collection device being arranged for collecting the food product.

According to a second general aspect of the invention, the above objective is solved by a method of manufacturing a food product, in particular a meat product, comprising the steps of moving a carrier substrate along a longitudinal substrate direction thereof, serially depositing components of the food product on the carrier substrate, using a plurality of deposition modules of a deposition device, which are arranged along the longitudinal substrate direction, and collecting the food product at a downstream end of the carrier substrate. Preferably, the manufacturing method or an embodiment thereof is executed using the food manufacturing apparatus according to the first general aspect of the invention or an embodiment thereof.

As a main advantage of the invention, the inventors have found that 3D printing of food components with multiple deposition modules arranged along a path of a movable carrier substrate allows a substantial increase of the production speed. A common carrier substrate is utilized with a series of deposition modules, thus reducing the complexity of the apparatus configuration and decreasing the costs of manufacturing the food product.

With each deposition module, at least one layer of the food product is deposited. As a further advantage of the invention, the operation of each deposition module can be optimized for the particular composition and/or distribution of the food components in a current layer to be applied.

On demand adjustment of the food product composition can be facilitated by controlling one or more of the deposition modules.

The invention offers new and extended applications of manufacturing food products, which preferably can be produced for personal consumption and/or for industrial-scale food production. In particular, in a food manufacturing plant, multiple food manufacturing apparatuses according to embodiments of the invention can be combined for further increasing an output of the food production.

The term "food product" refers to any homogeneous or heterogeneous substance that is consumable by an organism, like a human or animal, and provides nutritional support for the organism. The food product can be made of natural and/or artificially prepared substances. With a preferred example the food product is a meat or meat replacement product, that is composed of natural substances included in natural meat, like proteins, fat etc., natural substances included in other natural products, like plants, and/or artificial substances that are able to fulfil the same functions in terms of nutritional support, taste and consistency like the natural substances. However, the invention is not restricted to manufacturing a meat product, but also applicable for manufacturing other animal-based or plant-based products.

According to the invention, the food product is produced by 3D printing. The term "3D printing" of the food product refers to any process in which material of the food components is deposited with one of the deposition modules on the carrier substrate for creating the three-dimensional food product to be obtained, preferably layer by layer, wherein the food components are provided as a material, that is flowable, e. g. a liquid, paste and/or suspension including particles and/or fibres, and allows joining and solidification during and/or after deposition. The food product is manufactured like in a rapid prototyping process. Depositing the food components preferably is controlled via computer control, e. g. with a control device, which is connected at least with the deposition modules.

Preferably, each deposition module includes at least one of at least one extrusion device and at least one droplet dispenser device. The food components of the food product preferably are deposited by at least one of extrusion and droplet dispensing. Advantageously, available extrusion and/or droplet dispenser devices can be utilized for implementing the invention. Furthermore, the deposition modules can be configured for depositing the components with a spatial resolution better than 1 mm, typically 0,1 mm or 0,01 mm.

The deposition modules can be arranged along the longitudinal substrate direction with mutual distances therebetween. In this case, spacings between the deposition modules can be used for arranging additional processing stations and/or monitoring devices. Furthermore, due to the spacings between deposition modules, a certain healing time is allowed for joining food components deposited at a previous deposition module. Alternatively, the deposition modules can be arranged directly adjacent to each other. With this variant of the invention, advantages in terms of compact apparatus structure are obtained.

According to a preferred embodiment of the invention, the carrier substrate comprises at least one conveyor belt. Advantageously, a conveyor belt has a longitudinal shape, thus facilitating the movement along the longitudinal substrate direction. The at least one conveyor belt may comprise an endless conveyor belt circulating along the path of the movable carrier substrate. In this case, the conveyor device preferably comprises a motor with a roller driving the conveyor belt. For collecting the food product, it is separated from the conveyor belt, which is returned for further use to the deposition modules for further depositions. The conveyor belt can be made from e. g. a continuous, integral band material or chain elements (plastic chain link conveyor).

Alternatively or additionally, the at least one conveyor belt may comprise a flexible strip-shaped substrate sheet, which is moved on a roller bed along the longitudinal substrate direction. According to a variant of the invention, the at least one conveyor belt, in particular the flexible strip-shaped substrate sheet, is made of a food carrier material and the collection device is arranged for collecting the food product together with the food carrier material. Advantageously, this allows to utilize the carrier substrate as a portion of the food product to be obtained, either for supporting the completed food product or as a consumable part of the food product.

According to a further preferred embodiment of the invention, the conveyor device is adapted for a continuous operation. The term "continuous operation" of the conveyor device covers both of a non-interrupted, continuous movement and alternatively a continued, but step-wise movement of the carrier substrate past the deposition modules, thus allowing an increasing production speed. The deposition modules can be operated continuously as well, so that the food product is continuously manufactured. The food product can be manufactured as a strand and divided into portions, e. g. with the collections device. Alternatively, the deposition modules can be operated intermittently so that separate food product portions are deposited onto the carrier substrate. - the food product.

If, according to a further preferred embodiment of the invention, the carrier substrate comprises multiple conveyor belts being connected via at least one intersection, wherein each of the conveyor belts provides a carrier substrate branch and the deposition modules are arranged along the carrier substrate branches, further advantages in terms of increasing production speed and additional degrees of freedom in adjusting the food product composition are obtained. As an example, an initial conveyor belt can be provided for depositing a basis layer of a food product. Subsequently, the initial conveyor belt can be split into multiple branches wherein in each branch further food layers are deposited with different another food product recipe

According to a further variant, at least one of the carrier substrate branches is a storage branch without a deposition module. Advantageously, the storage branch can be used for further tasks during the manufacturing process, e. g. for storing or co-processing food product portions.

According to a further preferred embodiment of the invention, the deposition modules include at least one extrusion device and at least one droplet dispenser device, wherein the at least one extrusion device is adapted for depositing main components of the food product and/or the at least one droplet dispenser device is adapted for depositing main components of the food product and/or for depositing additives to main components of the food product. Main components of the food product comprise the substances which provide mostly of the food product, e. g. proteins, fat or fibres. Additives comprise e. g. salt, perfumes, flavours and/or spices.

As a particular advantage of the invention, the food product can be completely manufactured by droplet dispensing. With available piezoelectric droplet dispensers, layers with a thickness of 0,5 mm can be deposited. Accordingly, with about 30 to 50 deposition modules each with at least one droplet dispenser, a steak product can be printed.

Further advantages of the food manufacturing apparatus in terms of processing the food product, providing process conditions during the manufacturing process and/or monitoring the manufacturing process can be obtained if at least one of the following devices are provided. According to a first variant, at least one curing module, in particular heating device, is arranged for locally curing the components or the complete food product on the carrier substrate by at least one of a physical and a chemical treatment. Advantageously, the mechanical stability and consistency of the food product can be improved with the curing module(s). Additionally or alternatively, at least one compressing module is arranged for locally compressing the components or the complete food product on the carrier substrate by applying a pressure. Advantageously, various types of compressing modules are available, like rolling devices or punch devices. With the one compressing module, the mass density of the food product can be increased and the joining process of the deposited composition can be enforced. Additionally or alternatively, a conditioning system can be arranged for providing an environment with controlled humidity and/or temperature around the carrier substrate. Advantageously, the conditioning system improves the manufacturing conditions during the deposition processes. Additionally or alternatively, at least one camera device can be arranged for monitoring at least one of the carrier substrate and the deposition modules. Accordingly, the quality of the food product can be monitored. Furthermore, image signals of the at least one camera device can be used for controlling at least of the deposition modules.

The food manufacturing apparatus of the invention is provided with a collection device, which preferably is arranged at a downstream end of the carrier substrate. Preferably, the collection device comprises at least one cutting device being arranged at the downstream end of the carrier substrate, wherein the at least one cutting device includes at least one of a blade and a passing machine. Advantageously, the collection device allows to manufacture the food product with different structures, e. g. as a steak product or a ground meat product.

Preferably, at least one of the following conditions are met during manufacturing the food product. A preferred temperature of the components of the food product is in a range from 4°C to 100°C, particularly preferred in a range from 15 °C to 30°C, and most appropriately at 21°C. A preferred printing pressure at the deposition modules, in particular at the deposition modules, is in a range from 1 to 3,500 kPa, particularly preferred below 1,000 kPa, e. g. in an interval from 1 to 700 kPa, and preferably below 500 kPa.

According to a further particular advantage of the invention, the food components of the food product to be manufactured are selected by an on-demand control during the manufacturing of the food product. With the sequential arrangement of the deposition modules, changing the recipe during the process is substantially facilitated. Particularly preferred, at least one of salinity, acidity and calorie content of the components of the food product can be adjusted, in particular by an on-demand control, and the collecting of the food product can be controlled in dependency on the food product currently manufactured.

The invention has a further advantage with regard to modifying the shape of the food product during the manufacturing process. According to a variant of the invention, the components of the food product can be deposited such that a thickness of the food product varies along a longitudinal extension thereof. Preferably, the food product has line-shaped sections of reduced thickness perpendicular to the longitudinal extension of the food product at predetermined intervals. The line-shaped sections of reduced thickness provide cutting lines, which facilitate the cutting of a strand-shaped food product, e. g. at the collection device.

According to further preferred embodiments of the invention, the components of the food product comprise at least one of a plant-based edible printing dispersion, in particular prepared by mechanical, enzymatic and/or chemical processing steps to yield a plant-based and edible ink, carbohydrates, lipids, proteins, fiber, vitamins and minerals from one or more of plant sources such as carbohydrates in cereal crops, legume crops, plantains, root and tuber crops; fibers in vegetables, fruits, and whole grains cereals; fats in peanut, soybean, canola, sunflower, and coconuts; plant protein in beans, lentils, soybeans, green peas, cowpeas, quinoa and peanuts; and vitamins and minerals from fruits and vegetables and/or dietary supplements, a crosslinking agent, an agent setting rheological properties of the components during deposition thereof, in particular hydrocolloids or thickening and gelling agents, like gellan gum hydrocolloids, a dispersion in a liquid and/or oil media, with a viscosity between 1 and 250 Pa•s (250000 cP) at 21°C and/or a solids content ranging from about 1-80%, fibers with a length of about 1 to 5000 µm and a width of about 10 nm to 1000 µm, carrageenan hydrocolloids such as VISCARIN^{®}, GELCARIN^{®}, LACTARIN^{®} and/or LACTOGELI^{®}, and cellulose derivatives, in particular cellulose nanofibrils, cellulose gum and carboxy-methylcellulose.

Further aspects of the invention comprise
- using of a plant-based dispersion as an edible ink for 3D printing to produce edible and customized shapes for personal consumption,
- using of a plant-based dispersion as an edible ink for 3D printing to produce edible and customized shapes for industrial-scale food production,
- processing the ink material using mechanical, enzymatic and/or chemical processing steps to yield a plant-based and edible ink,
- adjusting salinity and/or acidity and/or calorie content of the plant-based dispersion,
- using of a plant-based edible ink for constructing 3D printed food products, with user-defined calorie content, wherein the 3D printed food product is produced for personal consumption or is part of an industrial-scale food production process, and/or
- crosslinking food components deposited on a substrate, in particular treating the 3D printed matter with an edible binder and/or heat.

A plant-based edible ink preferably comprises a dispersion in a liquid (watery) and/or oil media, wherein the fibers have a length of about 1 µm to 5000 µm and a width of about 10 nm to 1000 µm, a viscosity of between 1 and 250 Pa•s (250000 cP) at 21°C and/or a solids content ranging from about 1 % to 80 %. The plant-based edible ink preferably comprises additional plant sources for cross-linking purposes and/or to contribute to rheological properties of the edible ink, such as hydrocolloids or thickening and gelling agents.

Features disclosed in the context of the food manufacturing apparatus and the embodiments thereof also represent preferred features of the inventive food manufacturing method and vice versa. The aforementioned aspects and inventive and preferred features, in particular with regard to the configuration of the food manufacturing apparatus as well as the dimensions and compositions of individual components being described in relation to the apparatus, may also apply for the food manufacturing method. The preferred embodiments, variants and features of the invention described above are combinable with one another, e. g. in dependency on requirements of a practical application.

### Brief description of the drawings

Further details and advantages of the invention are described in the following with reference to the attached drawings, which schematically show in:
- Figure 1:: features of a food manufacturing apparatus and method according to a first embodiment of the invention;
- Figure 2:: features of a food manufacturing apparatus and method according to a further embodiment of the invention;
- Figure 3:: a plan view of a single branch embodiment of the invention; and
- Figure 4:: a plan view of a multi branch embodiment of the invention.

### Preferred embodiments of the invention

Features of preferred embodiments of the invention are described in the following with particular reference to depositing a food product on a conveyor belt. It is emphasized that the implementation of the invention is not restricted to the use of a conveyor belt as a carrier substrate, but rather possible with other carrier substrates being movable along a longitudinal path where multiple deposition modules are arranged. The drawings illustrate the arrangement of the deposition modules and further components of a food manufacturing apparatus in an exemplary manner. In practice, the number, geometry, distribution and arrangement of the deposition modules and the further components can be modified in dependency on application requirements. Details of the food components, recipes and food products to be manufactured are not described as they are known per se from conventional techniques of manufacturing food products by 3D printing.

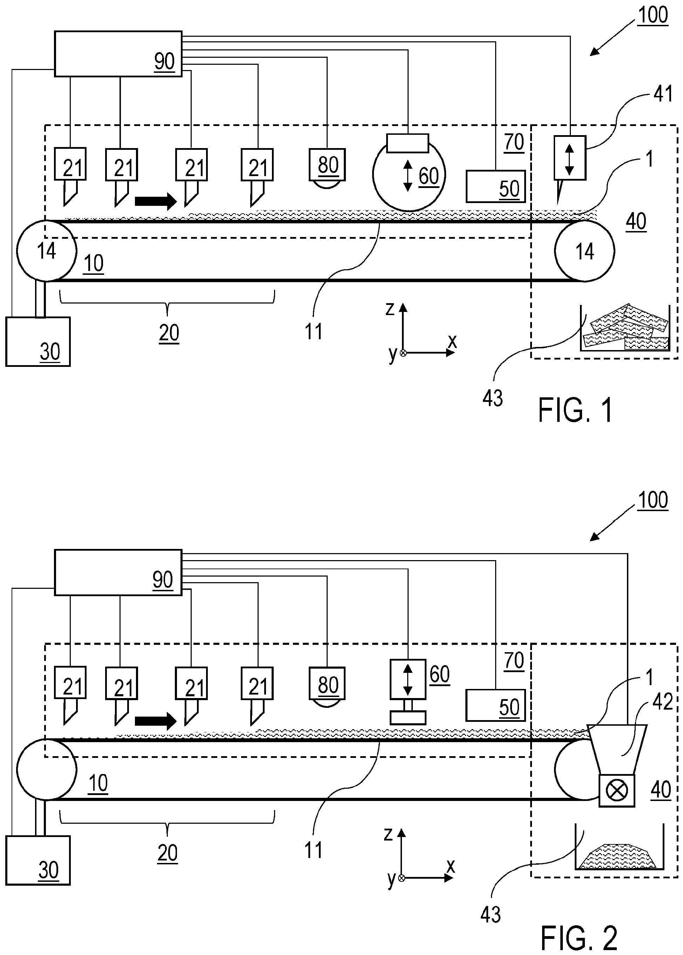

According to Figure 1, the food manufacturing apparatus 100 comprises a movable carrier substrate 10, a deposition device 20 with a plurality of the deposition modules 21, a conveyor device 30 driving the carrier substrate 10, a collection device 40, a curing module 50, a compressing module 60, a conditioning system 70, a camera device 80 and a control device 90 being connected with the components 10 to 80.

The carrier substrate 10 comprises the conveyor belt 11 extending in a longitudinal substrate direction (x-direction) between two guide wheels 14. One of the guide wheels 14 is driven with the conveyor device 30, comprising for instance an electric motor. The length and width of the upper surface of the conveyor belt 11 is selected in dependency on application requirements. With preferred examples, the length in x-direction can be selected in a range from some dm, e. g. 0,3 m, to some m, e. g. 10 m or more, and the width in y-direction can be selected in a range from some cm to some dm. The conveyor belt 11 is made of a flexible material, like for example a plastics material. It can be made of a single belt sheet. Alternatively, the conveyor belt 11 may have a multilayer structure, in particular with a food carrier material, like paper or a film material. As the uppermost layer, the foot carrier material layer can be supplied from a separate reservoir as a consumable, that can be separated from the carrier substrate 10 together with the manufactured food product 1 or pieces thereof.

The deposition device 20 includes multiple deposition modules 21. With practical examples, the number of deposition modules 21 is selected in dependency on the application requirements, for instance in a range from 2 to 100. Each deposition module 21 is connected with the control device 90. The control device 90 is configured for operating the deposition modules 21 according to a certain operation protocol, which is defined by the recipe of the food product 1 to be manufactured.

Each deposition module 31 comprises at least one extruder device and/or at least one droplet dispenser device. Each extruder device and/or each droplet dispenser device is connected with an associated substance reservoir (not shown) accommodating food components to be deposited onto the carrier substrate 10. The extruder device and/or the droplet dispenser device can be configured as it is known from conventional techniques of 3D printing and/or handling biological materials. As an example, the extruder device is e. g. a BIO X^{®} 3D bioprinter, as described e. g. in WO 2018/132057 A1 (3D bioprinters, a 3D bioprinting toolhead and a method for 3D bioprinting a construct) and the droplet dispenser device is e. g a sciFLEXARRAYER^{®} or cellenONE^{®}system, as described e. g. in Zahn et al. (2017) "Scalable whole-genome single-cell library preparation without preamplification" in "Nature methods" 14(2) 167-173.

With a preferred embodiment, the food manufacturing apparatus 100 can be implemented with a deposition system of the type sciFLEXARRAYER S100 (manufacturer Scienion AG, Germany). While the sciFLEXARRAYER S100 system comprises a series of droplet dispenser devices, one or more of the droplet dispenser devices can be replaced by an extruder device in a practical application of the invention.

The collection device 40 generally comprises a portion at the downstream end of the carrier substrate 10. The collection device 40 comprises a cutting device 41, which preferably is operated in a plane within the plane of the carrier substrate 10 (x-y-plane). The cutting device 41 includes a cutting blade being movable in z-direction for separating the strand of the manufactured foot product 1 into pieces 1A. The cutting tool 41 is controlled with the control device 90. The food product pieces are cut for instance with equal sizes according to a predetermined manufacturing protocol, or they are cut on the basis of an on demand protocol with varying sizes.

Furthermore, the collection device 40 includes a collection container 43, which is arranged for collecting the cut pieces of the food product 1. The collection container 43 is illustrated in a simplified manner only. With practical applications, the pieces of the food product 1 can be finally packed into transport containers to be sold to consumers.

The conditioning system 70 comprises a single container or a plurality of containers arranged along the longitudinal substrate direction (x-direction) and accommodating the conveyor belt 11. Each container is arranged for providing a local conditioning atmosphere at the deposition sites on the carrier substrate 10. To this end, each container is connected with a temperature control and/or a humidity control. Furthermore, each container of the conditioning system 70 can be adapted for providing a sterile environment along the carrier substrate 10. The conditioning system 70 can be arranged extending from the first deposition module 21 at an upstream end of the conveyor belt 11 to the curing module 50 near the downstream end of the conveyor belt 11. Alternatively, the conditioning system 70 can be extended even to the end of the conveyor belt 11, further including the collection device 40. Advantageously, this allows to provide a sterile environment during the whole manufacturing chain along the carrier substrate until the packing into the collection container 43.

The curing module 50 preferably includes heating device. With the curing module 50, a temperature of the food product 1 can be increased to a range of for instance 4 to 400 °C. At the elevated temperature, joining the food components within the food product 1 is facilitated. Deviating from the illustration in Figure 1, it is not necessarily required that the curing module 50 is arranged near the downstream end of the conveyor belt 11. It is possible to arrange the curing module 50 at another position along the conveyor belt 11, for instance between 2 the position module 21. Furthermore, multiple curing modules 50 can be provided and operated as required. As a further modification, it is not necessary that the curing module 50 is arranged above the conveyor belt 11. Alternatively, the curing module 50 can be integrated into the carrier substrate 10, for instance arranged below the conveyor belt 11, where the food product 1 is deposited.

The compressing module 60 comprises a roller, which is arranged for densifying the food product 1. With the roller of the compressing module 60, a thickness in z-direction of the food product 1 can be adjusted. The roller of the compressing module 60 can be provided with a surface structure on a circumferential surface thereof. With the surface structure, the thickness of the food product 1 can be modified along the x-direction, e. g. for providing line sections with reduced thickness (cutting lines) along the y-direction.

The camera device 80 is arranged for monitoring the food product 1, for instance for examining the homogeneity or colour thereof. The camera device 80 can be provided downstream of the last deposition module 21. Additionally or alternatively, a camera device can be arranged between deposition modules or downstream of the compressing module 60 or the curing module 50. The camera device 80 is connected with the control device 90. In dependency on image signals of the camera device 80, the deposition modules 21, the conveyor device 30, the cutting device 41, the curing module 50 or the compressing module 60 can be controlled.

For operating the food manufacturing apparatus 100, food components are loaded to reservoirs of the deposition modules 21. Movement of the carrier substrate 10 (see arrow) is driven by the conveyor device 30. The deposition modules 21 are operated for depositing food components onto the surface of the conveyor belt 11 so that the food product 1 is applied layer by layer. Due to the operation of the conveyor device 30, the food product 1 is continuously or intermittently transported in x-direction towards the collection device 40. During the transport, the quality of the food product 1 is monitored with the camera device 80. Furthermore, the food product 1 is compressed with the compressing module 60 and finally cured with the curing module 50. Pieces of the food product 1 are cut with the cutting device 41 and collected with the collection container 43.

Figure 2 illustrates features of alternative embodiments of the food manufacturing apparatus 100. The food manufacturing apparatus 100 basically is configured with the carrier substrate 10, the deposition device 20, the conveyor device 30, the collection device 40, the curing device 50, the compressing module 60, the conditioning system 70, the camera device 80 and the control device 90, as explained with reference to Figure 1. Deviating from Figure 1, the embodiment of Figure 2 includes a passing device 42 in the collection device 40. Accordingly, the grounded food product 1 can be collected in the collection container 43. As a further difference over the embodiment of Figure 1, the compressing device 60 comprises a stamp compressor.

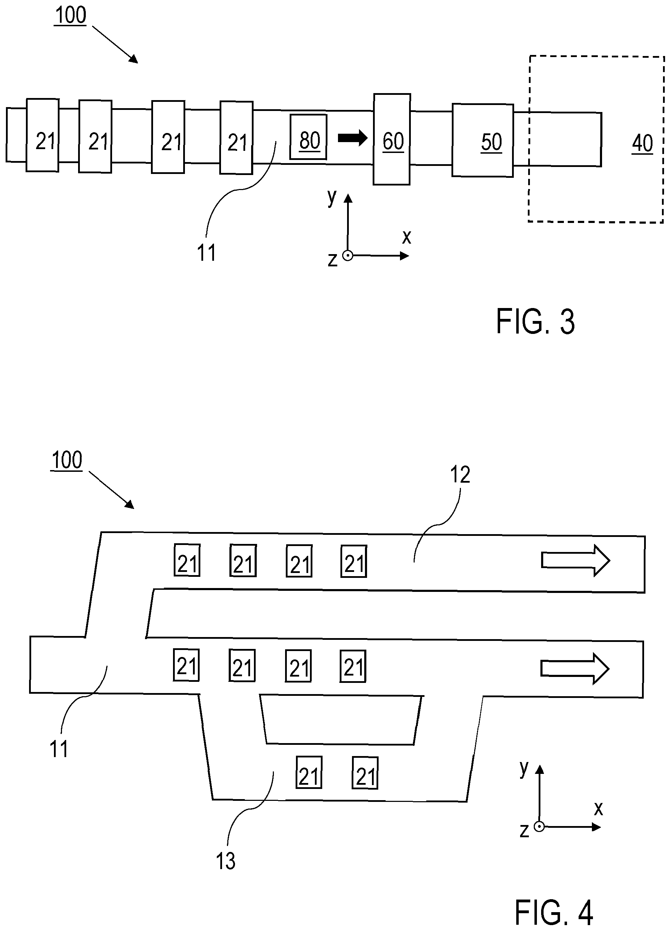

Figures 3 and 4 illustrate a single carrier substrate branch embodiment (Figure 3) and a multiple carrier substrate branch embodiment (Figure 4) of food manufacturing apparatuses 100 according to the invention. Figures 3 and 4 present plan views, wherein the x-y-plane is in the drawing plane.

According to Figure 3, a single conveyor belt 11 is provided. Along the length of the conveyor belt 11, multiple deposition modules 21, the components 50, 60 and 80 and the collection device 40 are arranged, as shown in Figures 1 and 2.

According to Figure 4, an initial conveyor belt 11 is split into three conveyor belts 11, 12 and 13, wherein deposition modules 21 are arranged along an extension of each of the separate conveyor belts 11, 12 and 13. In Figure 4, additional components, like the curing module 50, the compressing module 60 and the camera device 80 are not shown for clarity reasons. With this embodiment, additional degrees of freedom or influencing the composition of the food product to be manufactured are obtained.

As an alternative to Figure 4, one of the branches, like the carrier substrate branch with the conveyor belt 13 may be configured without a deposition module but with processing modules only. The processing modules may be configured e. g. for further heat and/or pressure applications or for a chemical treatment of the food product.

The features of the invention disclosed in the above description, the drawings and the claims can be of significance individually, in combination or sub-combination for the implementation of the invention in its different embodiments.

## Claims

1. Food manufacturing apparatus (100), being configured for manufacturing a food product (1), in particular a meat or meat replacement product (1), in a 3D printing process, comprising
- a movable carrier substrate (10) extending along a longitudinal substrate direction (x) and being adapted for accommodating the food product (1),
- a deposition device (20) comprising a plurality of deposition modules (21), which are arranged along the longitudinal substrate direction (x) of the carrier substrate (10), wherein each deposition module (21) is arranged for depositing components of the food product (1) on the carrier substrate (10),
- a conveyor device (30) being arranged for moving the carrier substrate (10) along the longitudinal substrate direction (x) thereof relative to the deposition modules (21), and
- a collection device (40) being arranged for collecting the food product (1).

2. Food manufacturing apparatus according to claim 1, wherein
- the carrier substrate (10) comprises at least one conveyor belt (11, 12, 13).

3. Food manufacturing apparatus according to claim 2, wherein
- the at least one conveyor belt (11, 12, 13) has an upper surface which is made of a food carrier material, and
- the collection device (40) is arranged for collecting the food product (1) together with the food carrier material.

4. Food manufacturing apparatus according to one of the foregoing claims, wherein
- the conveyor device (30) is adapted for a continuous operation.

5. Food manufacturing apparatus according to one of the foregoing claims, wherein
- the carrier substrate (10) comprises multiple conveyor belts (11, 12, 13) being connected via at least one intersection, wherein each of the conveyor belts (11, 12, 13) provides a carrier substrate branch and the deposition modules (21) are arranged along the carrier substrate branches.

6. Food manufacturing apparatus according to claim 5, wherein
- at least one of the carrier substrate branches is a storage branch without a deposition module (21).

7. Food manufacturing apparatus according to one of the foregoing claims, wherein
- at least one extrusion device (22) is adapted for depositing main components of the food product (1), and/or
- at least one droplet dispenser device (23) is adapted for depositing main components of the food product (1) and/or for depositing additives to main components of the food product (1).

8. Food manufacturing apparatus according to one of the foregoing claims, further including at least one of
- at least one curing module (50), in particular at least one heating device, being arranged for locally curing the components or the complete food product (1) on the carrier substrate (10) by at least one of a physical and a chemical treatment,
- at least one compressing module (60) being arranged for locally compressing the components or the complete food product (1) on the carrier substrate (10) by applying a pressure,
- a conditioning system (70) being adapted for providing an environment with controlled humidity and/or temperature around the carrier substrate (10), and
- at least one camera device (80) being arranged for monitoring at least one of the carrier substrate (10) and the deposition modules (21).

9. Food manufacturing apparatus according to one of the foregoing claims, wherein
- the collection device (40) comprises at least one cutting device (41, 42) being arranged at a downstream end of the carrier substrate (10), wherein
- the at least one cutting device includes at least one of a blade machine (41) and a passing machine (42).

10. Method of manufacturing a food product (1), in particular a meat or meat replacement product, comprising the steps of
- moving a carrier substrate (10) along a longitudinal substrate direction (x) thereof,
- serially depositing components of the food product (1) on the carrier substrate (10), using a plurality of deposition modules (21) of a deposition device (20), which are arranged along the longitudinal substrate direction (x), and
- collecting the food product (1) at a downstream end of the carrier substrate (10).

11. Method according to claim 10, wherein
- the food product (1) is continuously manufactured.

12. Method according to one of the claims 10 to 11, wherein
- the food product (1) is completely manufactured by droplet dispensing.

13. Method according to one of the claims 10 to 12, further including at least one of the steps
- locally curing the components or the complete food product (1) on the carrier substrate (10) by at least one of a physical and a chemical treatment,
- locally compressing the components or the complete food product (1) on the carrier substrate (10) by applying a pressure,
- providing an environment with controlled humidity and/or temperature around the carrier substrate (10), and
- monitoring at least one of the carrier substrate (10) and the deposition modules (21).

14. Method according to one of the claims 10 to 13, wherein at least one of the following conditions are met during manufacturing the food product (1)
- a temperature of the components of the food product (1) is in a range from 4°C to 100°C, preferably 15 °C to 30°C, and
- a printing pressure is in a range from 1 to 3,500 kPa, preferably below 1,000 kPa.

15. Method according to one of the claims 10 to 14, wherein
- the step of collecting the food product (1) comprises cutting the food product (1) at a downstream end of the carrier substrate (10).

16. Method according to one of the claims 10 to 15, wherein
- the components of the food product (1) are selected by an on-demand control during the manufacturing of the food product (1).

17. Method according to claim 16, further including
- adjusting at least one of salinity, acidity and calorie content of the components of the food product (1), and
- controlling the collecting of the food product (1) in dependency on the food product (1) currently manufactured.

18. Method according to one of the claims 10 to 17, wherein
- the components of the food product (1) are deposited such that a thickness of the food product (1) varies along a longitudinal extension thereof.

19. Method according to one of the claims 10 to 18, wherein the components of the food product (1) comprise at least one of
- a plant-based edible printing dispersion, in particular prepared by mechanical, enzymatic and/or chemical processing steps to yield a plant-based and edible ink,
- carbohydrates, lipids, proteins, fiber, vitamins and minerals from one or more of plant sources such as carbohydrates in cereal crops, legume crops, plantains, root and tuber crops; fibers in vegetables, fruits, and whole grains cereals; fats in peanut, soybean, canola, sunflower, and coconuts; plant protein in beans, lentils, soybeans, green peas, cowpeas, quinoa and peanuts; and vitamins and minerals from fruits and vegetables and/or dietary supplements,
- a crosslinking agent,
- an agent setting rheological properties of the components during deposition thereof, in particular hydrocolloids or thickening and gelling agents, like gellan gum hydrocolloids
- a dispersion in a liquid and/or oil media, with a viscosity between 1 and 250 Pa•s (250000 cP) at 21°C and/or a solids content ranging from about 1-80%,
- fibers with a length of about 1 to 5000 µm and a width of about 10 nm to 1000 µm,
- carrageenan hydrocolloids such as VISCARIN^{®}, GELCARIN^{®}, LACTARIN^{®} and/or LACTOGELI^{®}, and
- cellulose derivatives, in particular cellulose nanofibrils, cellulose gum and carboxy-methylcellulose.
